# NEUE EUROPÄISCHE PATENTSCHRIFT

(11) **EP 1 213 273 B2**
(45) Veröffentlichungstag und Bekanntmachung des Hinweises auf die Entscheidung über den Einspruch: **07.10.2009**
(45) Hinweis auf die Patenterteilung: 16.10.2002
(21) Anmeldenummer: 01126427.2
(22) Anmeldetag: 08.11.2001
(51) Int. Cl.: C04B 35/5833, C01B 21/064, B22D 11/06

(54) **Verfahren zum Recycling von Seitenplatten für das Dünnbandgiessen von Stahl**
Method of recycling side-dam plates for thin sheet casting of steel
Procédé de récupération des plaques de dame pour couler acier en couches minces

(30) Priorität: 09.11.2000 DE 10055442
(43) Veröffentlichungstag der Anmeldung: 12.06.2002
(73) Patentinhaber: ESK Ceramics GmbH & Co.KG, 87437 Kempten (DE)
(72) Erfinder: Jüngling, Thomas, Dr., 87437 Kempten (DE); Bencker, Ulrich, 87477 Sulzberg (DE); Kiechle, Herbert, 87439 Kempten (DE); Lerf, Siegfried, 87477 Sulzberg (DE); Müller, Stefan, 87487 Wiggensbach (DE)
(74) Vertreter: TER MEER - STEINMEISTER & PARTNER GbR

(56) Entgegenhaltungen:
- EP- - 0 432 073
- EP-A- 0 447 940
- CA- - 1 240 711
- FR- - 2 749 785
- US- - 4 847 031
- US- - 4 885 264
- US- - 5 227 347
- US- - 5 266 263
- R.T.OXNARD: 'Refractory Recycling' AMERICAN CERAMIC SOCIETY BULLETIN Bd. 73, Nr. 10, Oktober 1994, Seiten 46 - 49
- D.E: ABRINO: 'Waste Minimization in Industries Using Refractory Materials' PROCEEDINGS OF UNIFIED INTERNATIONAL TECHNICAL CONFERENCE ON REFRATORIES Bd. 1, November 1997, NEW ORLEANS, Seiten 465 - 571
- J.TIRLOCQ: 'Vers un Cycle de Vie Complet des Produits Refractaires' EUROCERAM NEWS Bd. 10, 2002, Seiten 1 - 10
- KENNETH SHAW: 'Refractories and Their Uses', 1972, APPLIED SCIENCE PUBLISHERS LTD, LONDON
- R.T. OXNARD: 'Benefits in the Quality Recycling of Refractory Materials' UNITECR'89 1989, Seiten 1538 - 1543

## Beschreibung

Die Erfindung betrifft ein Verfahren zum Recycling von Seitenplatten für das Dünnbandgießen von Stahl.

Hexagonales Bornitrid (BN) wird üblicherweise durch Heißpressen von pulverförmigem BN zu Körpern mit hoher Sinterdichte verdichtet. Aus diesen Sinterkörpern werden Seitenplatten (sog. Side-dams) für das Dünnbandgießen von Stahl durch Sägen, Drehen oder Fräsen herausgearbeitet. Neben reinem BN werden auch unterschiedliche Mischkeramiken aus BN und Oxiden, aus BN und einer Mischung aus Oxiden und Carbiden oder aus BN und Sialonen durch Heißpressen hergestellt. Derartige Werkstoffe sind z.B. in den Patenten EP 447940, EP 0 195 417, DE 38 24 849 A1 und US 4,885,264 beschrieben. Übliche Zusammensetzungen derartiger Mischkeramiken sind für
a) BN-Oxid-Carbid-Mischkeramiken:
   30 - 85 Gew.% BN
   10 - 50 Gew.% ZrO₂, MgO
   5 - 20 Gew.% SiC, ZrC, TiC
b) BN-Oxid-Mischkeramiken:
   60 - 80 Gew.% BN
   20 - 40 Gew.% ZrO₂, MgO
   In der nicht vorveröffentlichten DE-A- 10015849 sind Zusammensetzungen beschrieben, mit denen eine Feuchtigkeitsaufnahme nach der Sinterung durch Abreaktion des B₂O₃ im Verlauf der Sinterung vermieden werden kann. Derartige Zusammensetzungen sind für:
c) BN-Oxid-Carbid-Mischkeramik:
   21 - 83,8 Gew.% BN
   10 - 50 Gew.% ZrO₂, MgO
   5 - 20 Gew.% SiC, ZrC, TiC
   1,2 - 9 Gew.% eines Additivs ausgewählt aus der Gruppe der Oxide, Carbide und Nitride der Elemente Si, Al, Ti sowie Umsetzungsprodukte der genannten Additive mit B₂O₃.
d) BN-Oxid-Mischkeramik:
   51 - 78,8 Gew.% BN
   20 - 40 Gew.% ZrO₂, MgO
   1,2 - 9 Gew.% eines Additivs, ausgewählt aus der Gruppe der Oxide, Carbide und Nitride der Elemente Si, Al, Ti sowie Umsetzungsprodukte der genannten Additive mit B₂O₃.

Die Seitenplatten für das Dünnbandgießen von Stahl zeigen nach dem Einsatz typischerweise mechanische Verschleißspuren und chemischen Verschleiß an den Kontaktstellen zur metallischen Schmelze. Die Lebensdauer der Bauteile wird entweder durch den mechanischen und/oder chemischen Verschleiß, oder durch Anlagen- bzw. Verfahrensparameter, wie die Chargengröße der zu vergießenden Schmelze oder die Gießbedingungen bestimmt. Typischerweise sind am Ende der Lebensdauer >90% des Bauteilvolumens weder mechanisch noch chemisch verschlissen. Dennoch werden bisher die Bauteile komplett verworfen und durch neue Bauteile ausgetauscht.

Aufgabe der Erfindung ist es, ein Verfahren zur Verfügung zu stellen, das ein umweltfreundliches, abfallarmes Wiederaufarbeiten von Seitenplatten (sog. Side-dams) für das Dünnbandgießen von Stahl, im Folgenden als Seitenplatten bezeichnet, mit einer mechanisch oder chemisch verschlissenen Oberfläche ermöglicht.

Die Aufgabe wird gelöst durch ein Verfahren, das dadurch gekennzeichnet ist, daß die mechanisch oder chemisch verschlissene Oberfläche der Seitenplatten mittels an sich bekannter Verfahren gereinigt wird und die Seitenplatte anschließend durch Brechen und Mahlen in ein BN-haltiges Pulver überführt wird.

Die Reinigung der Seitenplatte erfolgt vorzugsweise dadurch, daß die Verschleißfläche der Seitenplatte, die mit einer Metallschmelze im Kontakt war, mechanisch durch Schleifen bearbeitet wird. Durch das Schleifen wird die Reaktionsschicht entfernt, die sich beim metallurgischen Einsatz der Seitenplatte bildet. Die Seitenplatte weist nach dem Abschleifen der Reaktionsschicht dieselbe Zusammensetzung auf wie eine ungebrauchte Seitenplatte.

Eine derart gereinigte Seitenplatte wird mit einem Backenbrecher grob vorzerkleinert und anschließend mit einem konventionellen Mahlaggregat, wie z.B. einer Kugelmühle, Vibrationsmühle oder Prallplattenmühle, zu einem Pulver aufgemahlen.

Das Pulver hat dabei vorzugsweise eine Korngröße wie ein entsprechendes neues Pulver, das zur Herstellung einer Seitenplatte eingesetzt wird. Diese liegt in der Regel bei ca. 10-15 µm mittlerer Teilchengröße.

Die Zusammensetzung des so erhaltenen Pulvers entspricht näherungsweise derjenigen des ursprünglich eingesetzten Pulvermischung. Im Verlauf der erfindungsgemäßen Aufbereitung kann es lediglich zu einer geringen Sauerstoffzunahme kommen, die jedoch durch geeignete Aufbereitungsverfahren, z.B. Aufmahlung unter Schutzgas, stark begrenzt werden kann.

Vorzugsweise wird die Mahlung im erfindungsgemäßen Verfahren daher unter Schutzgas, vorzugsweise Stickstoff oder Argon, durchgeführt.

Das so erhaltene Recyclingpulver kann als Rohstoff für die Herstellung neuer Seitenplatten zum Einsatz kommen.

Das Recyclingpulver wird in reiner Form, vorzugsweise jedoch unter Zugabe neuer frischer Rohstoffe, verwendet.

Der Anteil an Recyclingpulver beträgt dabei vorzugsweise zwischen 10 und 60 Gew.%, besonders bevorzugt zwischen 20 und 50 Gew.%, insbesondere bevorzugt zwischen 25 und 35 Gew.%.

Erstaunlicherweise zeigte sich, daß die aus Recyclingpulver oder unter Verwendung des Recyclingpulvers hergestellten Seitenplatten bessere Eigenschaften besitzen, als Seitenplatten, die ausschließlich aus frischen Rohstoffen hergestellt wurden.

Insbesondere Seitenplatten mit einem Gehalt von 10 - 60 Gew.% an Recyclingpulvern, vorzugsweise 20 - 50 % Gew.% an Recyclingpulvern, besonders bevorzugt 25 - 35 % Gew.% an Recyclingpulvern, zeigen unerwartet verbesserte Eigenschaften wie z.B. höhere Dichte, Biegebruchfestigkeit und Härte.

Die Erfindung betrifft daher auch Seitenplatten für metallurgische Anwendungen, die dadurch gekennzeichnet sind, daß sie unter Verwendung des Recyclingpulvers hergestellt wurden.

Die folgenden Beispiele dienen der weiteren Erläuterung der Erfindung.

### Beispiel 1:

Seitenplatten, die während des Gebrauchs durch den Kontakt mit Stahlschmelzen verunreinigt wurden, waren das Ausgangsmaterial für die Aufbereitung eines Recyclingpulvers. Die verunreingten Oberflächen wurden mittels Schleifen so bearbeitet, daß keine Verunreinigungsspuren, Anhaftungen oder Reaktionszonen zurückblieben. Als Schleifscheibe kam eine in der Keramikbearbeitung übliche Diamantschleifscheibe zum Einsatz. Anschließend erfolgte die grobe Zerkleinerung der erhaltenen Teile mittels Backenbrecher. Durch 1-stündige Mahlung des grob vorzerkleinerten Materials in einer Vibrationsmühle wurde eine mittlere Teilchengröße von 10-15 µm erreicht.

### Beispiel 2:

### Herstellung und Vergleich einer erfindungsgemäßen BN-Keramik mit Recycling-Pulver (EB) und einer Vergleichs-BN-Keramik (VB) gemäß dem Stand der Technik:

Es wurden homogene Pulvermischungen folgender Zusammensetzungen hergestellt:
EB: 34,3% BN, 28% ZrO₂, 5,6% SiC, 2,1% B₂O₃ sowie 30% Recycling-Pulver der Zusammensetzung 49% BN, 40% ZrO₂, 8% SiC, 3% B₂O₃.
VB: 49% BN, 40% ZrO₂, 8% SiC, 3% B₂O₃.

Die homogenen Pulvermischungen wurden durch axiales zweiseitiges Heißpressen in Graphitmatrizen bei Temperaturen > 1650°C und einem Druck > 25 MPa zu Sinterkörpern mit einer Dichte > 94% der theoretischen Dichte verdichtet. Aus den Sinterkörpern wurden mittels Bandsägen Probekörper zur Bestimmung der folgenden physikalischen und mechanischen Eigenschaften herausgearbeitet :

| | EB | | VB | |
|---|---|---|---|---|
| Dichte [g/cm³] | 3,02 | | 2,92 | |
| Bieqebruchfestigkeit | 148 | | 120 | |
| E-Modul [Gpa] | 80 | | 80 | |
| Brinell-Härte | 90 | | 65 | |
| Temperaturleitfähigkeitszahl | RT | 15,8 | RT | 16,9 |
| | 400°C | 9,9 | 400°C | 10,0 |

Das erfindungsgemäße Material hat unter den gewählten Bedingungen bessere mechanische Eigenschaften als das Material gemäß Stand der Technik.

## Patentansprüche

1. Verfahren zur umweltfreundlichen, abfallarmen Wiederaufarbeitung von Seitenplatten für das Dünnbandgießen von Stahl mit einer mechanisch oder chemisch verschlissenen Oberfläche, das **dadurch gekennzeichnet ist, daß** die mechanisch oder chemisch verschlissene Oberfläche der Seitenplatten mittels an sich bekannter Verfahren gereinigt wird und die Seitenplatte anschließend durch Brechen und Mahlen in ein BN-haltiges Pulver überführt wird.

2. Verfahren gemäß Anspruch 1, **dadurch gekennzeichnet, daß** die Verschleißfläche der Seitenplatte, die mit einer Metallschmelze im Kontakt war, mechanisch durch Schleifen bearbeitet wird.

3. Verfahren gemäß Anspruch 1 oder 2, **dadurch gekennzeichnet, daß** die gereinigte Seitenplatte mit einem Backenbrecher grob vorzerkleinert und anschließend mit einem konventionellen Mahlaggregat zu einem Pulver aufgemahlen wird.

4. Verfahren gemäß einem der Ansprüche 1 bis 3, **dadurch gekennzeichnet, daß** die Mahlung unter Schutzgas durchgeführt wird.

5. Seitenplatte für das Dünnbandgießen von Stahl, **dadurch gekennzeichnet, daß** sie unter Verwendung eines nach einem Verfahren gemäß einem der Ansprüche 1 bis 4 erhaltenen BN-Pulvers hergestellt wurde.

6. Seitenplatte nach Anspruch 5, **dadurch gekennzeichnet, daß** der Anteil des BN-Pulvers gemäß Anspruch 5 zwischen 10 und 60 Gew.% beträgt.

## Claims

1. Process for environmentally friendly, low-waste reprocessing of side dams for the continuous casting of thin steel strip having a mechanically or chemically worn surface, which process is **characterized in that** the mechanically or chemically worn surface of the side dams is cleaned by methods known per se and the side dams are subsequently converted into a BN-containing powder by crushing and milling.

2. Process according to Claim 1, **characterized in that** the wear surface of the side dam which has been in contact with a metal melt is ground mechanically.

3. Process according to Claim 1 or 2, **characterized in that** the cleaned side dam is coarsely broken up by means of a jaw crusher and subsequently milled to a powder by means of a conventional milling apparatus.

4. Process according to any of Claims 1 to 3, **characterized in that** the milling is carried out under protective gas.

5. Side dam for the continuous casting of thin steel strip, **characterized in that** it has been produced using a BN-containing powder obtained by a process according to any of Claims 1 to 4.

6. Side dam according to Claim 5, **characterized in that** the proportion of BN-containing powder according to Claim 5 is in the range from 10 to 60% by weight.

## Revendications

1. Procédé de récupération non polluante, pauvre en déchets, de plaques latérales pour la coulée en feuilles mince d'acier avec une surface usée par voie mécanique ou par voie chimique, **caractérisé en ce que** la surface usée par voie mécanique ou par voie chimique des plaques latérales est nettoyée à l'aide d'un procédé connu en soi et **en ce que** les plaques latérales sont ensuite converties, par fragmentation et mouture, en une poudre contenant du BN.

2. Procédé selon la revendication 1, **caractérisé en ce que** la surface d'usure des plaques latérales qui étaient en contact avec la masse de métal en fusion, est usinée par rectification.

3. Procédé selon la revendication 1 ou la revendication 2, **caractérisé en ce que** la plaque latérale nettoyée est soumise à une fragmentation grossière préalable dans un concasseur à mâchoires et est ensuite soumise à une mouture classique dans une unité de mouture classique pour former une poudre.

4. Procédé selon l'un quelconque des revendications 1 à 3, **caractérisé en ce que** la mouture est effectuée sous un gaz de protection.

5. Plaque latérale pour la coulée en feuilles minces d'acier, **caractérisée en ce qu'**elle a été fabriquée par utilisation d'une poudre contenant du BN obtenue selon un procédé selon l'une quelconque des revendications 1 à 4.

6. Plaque latérale selon la revendication 5, **caractérisé en ce que** la proportion de la poudre contenant du BN selon la revendication 5 est comprise entre 10 e 60 % en poids.
